# EUROPEAN PATENT SPECIFICATION

(11) **EP 4 183 591 B1**
(45) Date of publication and mention of the grant of the patent: **17.06.2026**
(21) Application number: 22207917.0
(22) Date of filing: 16.11.2022
(51) Int. Cl.: B42D 25/324, B42D 25/328, B42D 25/373, B42D 25/425, B42D 25/44, B42D 25/445, B42D 25/45, C09D 11/037, C09C 1/00

(54) **COMPLEMENTARY FLAKES**
KOMPLEMENTÄRE FLOCKEN
FLOCONS COMPLÉMENTAIRES

(30) Priority: 17.11.2021 US 202117529015
(43) Date of publication of application: 24.05.2023
(73) Proprietor: Viavi Solutions Inc., Chandler, AZ 85286 (US)
(72) Inventor: ARGOITIA, Alberto, Santa Rosa, 95405 (US)
(74) Representative: Murgitroyd & Company

(56) References cited:
- EP-A1- 2 062 947
- EP-A1- 3 517 580
- US-A1- 2015 337 137
- US-B2- 7 974 010

## Description

### FIELD OF THE INVENTION

The present disclosure generally relates to a sheet for making a complementary set of flakes, including a substrate having a surface, wherein the surface includes a first marking that defines a boundary of a hollow flake of the complementary set of flakes, and a second marking that defines a boundary of a solid flake of the complementary set of flakes; wherein the first marking and the second marking are each, independently, configured to protrude from a plane of the surface or depress down from the plane of the surface; and wherein the first marking surrounds the second marking. A complementary set of flakes, and a method of making the complementary set of flakes are also disclosed

### BACKGROUND OF THE INVENTION

Specialty pigments have been developed for use in security applications, such as anti-counterfeiting devices printed on banknotes, packaging of high-value items, seals for containers, and even for direct application to commercial items. For example, the U.S. twenty-dollar Federal Reserve Note currently uses optically variable ink. The number "20" printed in the lower-right corner of the face of the note changes color as the viewing angle changes. This is an overt anti-counterfeiting device. The color-shifting effect is not reproducible by ordinary color photocopiers, and someone receiving a note can observe whether it has the color-shifting security feature to determine the note's authenticity.

Similar measures include iridescent pigments or diffractive pigments that are used in paints and inks that are applied directly to an article, such as a stock certificate, passport, original product packaging, or to seals that are applied to an article. Security features that are more difficult to counterfeit are desirable as counterfeiters continue to become more sophisticated.

One anti-counterfeiting approach uses microscopic symbols on multi-layer color-shifting pigment flakes. The symbols are formed on at least one of the layers of the multi-layer color-shifting pigment flakes by a local change of an optical property(s), such as reflectivity. The multi-layer color-shifting pigment flakes generally include a Fabry Perot-type structure having an absorbing layer separated from a reflective layer by a spacer layer. The reflective layer is typically a layer of metal, which renders the pigment flake essentially opaque. If a large portion of these types of pigment flakes are mixed with other pigment, the resultant color might be significantly different from the pigment, and if too few of these flakes are mixed with other pigment, they might be difficult to find.

Generally, bulk pigment particles, including bulk pigment flakes, have an irregular or random shape. That is, these pigment flakes are not designed to have a particular first configuration. Moreover, these pigment flakes are not designed to be a set of complementary flakes. These flakes cannot be distinguished based upon shape and therefore fail to provide this additional means of establishing authenticity.

It is desirable to mark objects with covert anti-counterfeiting devices. Additionally, it is desirable to continue to develop new covert anti-counterfeiting devices. For example, it is desirable to provide a method of mass producing flakes, such as two flakes at one time, in which the flakes are complementary to one another. The use of complementary flakes, in which one flake is opaque and the other flake is transparent, can provide additional sophistication to a device coated with a composition including the complementary flakes. EP 2062947 A1, US 2015/337137 A1, US 7974010 B2 and EP 3517580 A1 may be useful to understand the background of the invention.

### BRIEF DESCRIPTION OF THE DRAWINGS

Features of the present disclosure are illustrated by way of example and not limited in the following figure(s), in which like numerals indicate like elements, in which:
FIG. 1 illustrates a sheet according to an aspect of the invention;
FIG. 2 illustrates a portion of a sheet according to an aspect of the invention;
FIGs 3A and 3B illustrate a complementary set of flakes, in which FIG. 3A illustrates a hollow flake, and FIG. 3B illustrates the complementary solid flake, according to an aspect of the invention;
FIGs. 4A-4C illustrate a cross-section of a sheet (FIG. 4A) that can make the complementary set of flakes (FIG. 4B - hollow flake, and FIG. 4C - solid flake), according to an aspect of the invention;
FIGs. 5A-5C illustrate a cross-section of a sheet (FIG. 5A) that can make the complementary set of flakes (FIG. 5B - hollow flake, and FIG. 5C - solid flake), according to another aspect of the invention;
FIGs. 6A-6C illustrate a cross-section of a sheet (FIG. 6A) that can make the complementary set of flakes (FIG. 6B - hollow flake, and FIG. 6C - solid flake), according to another aspect of the invention;
FIGs. 7A-7C illustrate a cross-section of a sheet (FIG. 7A) that can make the complementary set of flakes (FIG. 7B - hollow flake, and FIG. 7C - solid flake), according to another aspect of the invention;
FIGs. 8A-8C illustrate a cross-section of a sheet (FIG. 8A with a marking as a depression) that can make the complementary set of flakes (FIG. 8B - hollow flake, and FIG. 8C - solid flake with a marking), according to another aspect of the invention;
FIGs. 9A-9C illustrate a cross-section of a sheet (FIG. 9A with a marking) that can make the complementary set of flakes (FIG. 9B - hollow flake with a marking, and FIG. 9C - solid flake), according to another aspect of the invention;
FIGs. 10A-10C illustrate a cross-section of a sheet (FIG. 10A with a marking as a protrusion) that can make the complementary set of flakes (FIG. 10B - hollow flake, and FIG. 10C - solid flake with a marking), according to another aspect of the invention;
FIGs. 11A-11C illustrate a cross-section of a sheet (FIG. 11A with a marking as a protrusion and as a depression) that can make the complementary set of flakes (FIG. 11B- hollow flake with a marking depression, and FIG. 11C-solid flake with a marking protrusion), according to another aspect of the invention;
FIG. 12 illustrates a hollow flake and its associated cross-section; and
FIG. 13 illustrates a solid flake and its associated cross-section.

### SUMMARY OF THE INVENTION

In an aspect, there is disclosed a sheet for making a complementary set of flakes as defined in claim 1.

The sheet may further comprise a coating on the surface of the substrate, wherein the coating may conform to the surface of the substrate including the first marking and the second marking.

The substrate may be a roll of foil.

The second marking may be a wall delimiting the solid flake.

The second marking may depress deeper down from the plane of the surface of the substrate as compared to the first marking.

The second marking may depress down a same depth from the plane of the surface of the substrate as the first marking.

The first marking may not depress down an entire height of the substrate.

The first marking may be continuous along a dimension of the substrate.

The first marking may be discontinuous along a dimension of the substrate.

The surface of the substrate may further include a third marking that defines a boundary of an indicium. The indicium may be chosen from a symbol, a number, a word, a pattern, a logo, an indicium, a diffractive microstructure, and combinations thereof. The first marking and the second marking may each depress deeper down from the plane of the surface of the substrate as compared to the third marking. The third marking may be chosen from a depression down from the plane of the substrate or a protrusion up from the plane of the substrate.

In another aspect, there is disclosed a complementary set of flakes as defined in claim 12.

The coating may be a single layer.

The coating may be multiple layers.

At least one of the solid flake and the hollow flake may include an indicium.

In a further aspect, there is also disclosed a coating composition, comprising: at least one flake from the complementary set of flakes described herein; a special effect pigment; and a liquid medium.

In a further aspect, there is also disclosed a method of making a complementary set of flakes as defined in claim 14.

The solid flake may have a first configuration; and the hollow flake may have a second configuration, wherein the second configuration may include the coating in a form of a frame around an absence of the coating, wherein the absence of the coating may be in the form of the first configuration.

Additional features and advantages of various embodiments will be set forth, in part, in the description that follows, and will, in part, be apparent from the description, or can be learned by the practice of various embodiments. The objectives and other advantages of various embodiments will be realized and attained by means of the elements and combinations particularly pointed out in the description herein.

### DETAILED DESCRIPTION OF THE INVENTION

For simplicity and illustrative purposes, the present disclosure is described by referring mainly to an example thereof. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Additionally, the elements depicted in the accompanying figures may include additional components and some of the components described in those figures may be removed and/or modified without departing from scopes of the present disclosure. Further, the elements depicted in the figures may not be drawn to scale and thus, the elements may have sizes and/or configurations that differ from those shown in the figures.

It is to be understood that both the foregoing general description and the following detailed description are exemplary and explanatory only, and are intended to provide an explanation of various embodiments of the present teachings. In its broad and varied embodiments, disclosed herein are a sheet, a complementary set of flakes, a coating composition, and a method of making a complementary set of flakes. A complementary set of flakes is understood to mean a shape of one flake of the set complements a shape of the other flake of the set. In this manner, when the flakes are together a whole coating can be formed.

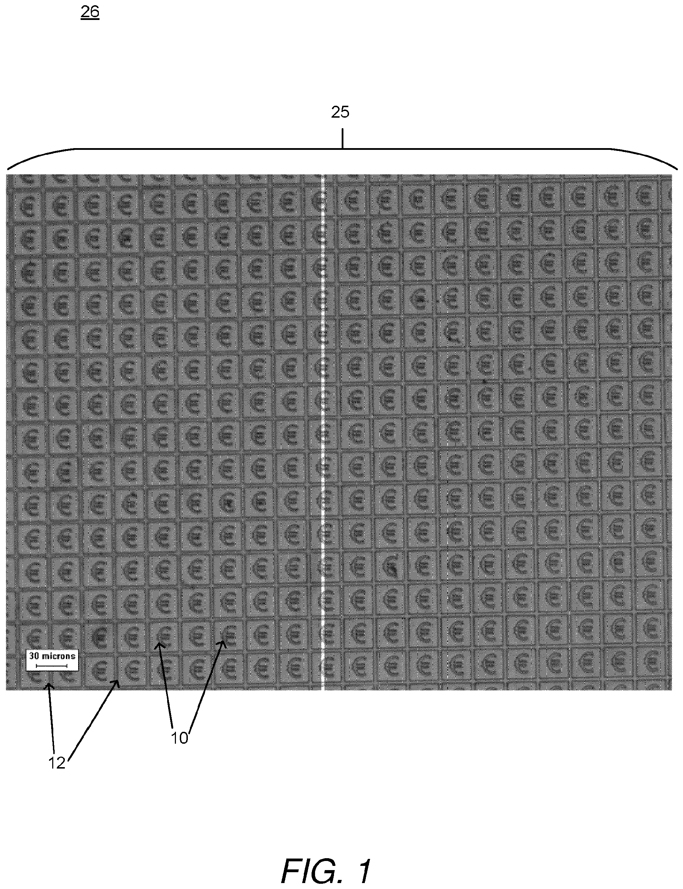

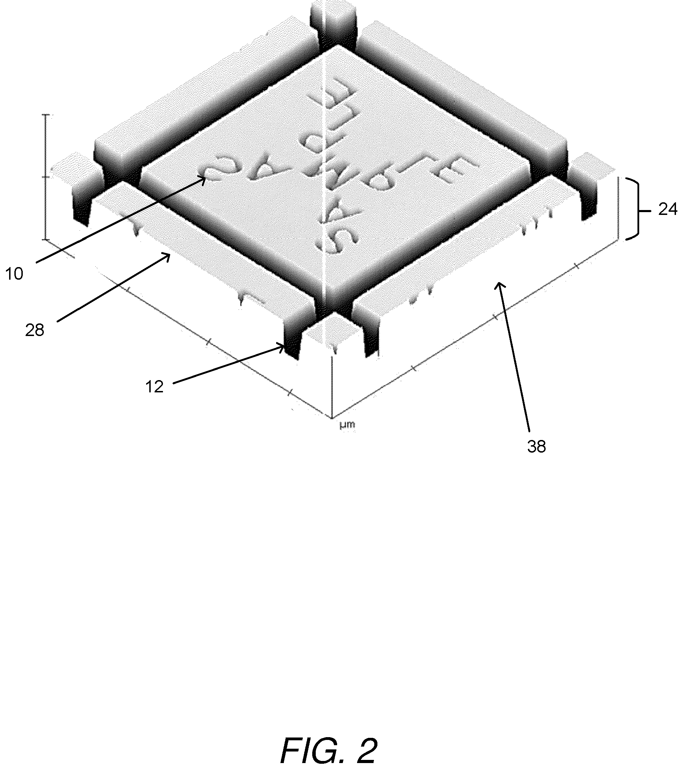

As shown in FIGs. 1 and 2, there is a sheet 26 including a substrate 38 having a surface 28, wherein the surface 28 includes a first marking 12 that defines a boundary of a hollow flake 30a, and a second marking 10 that defines a boundary of a solid flake 30b; wherein the first marking 12 and the second marking 10 are each, independently, configured to protrude from a plane of the surface 28 or depress down from the plane of the surface 28; and wherein the first marking 12 surrounds the second marking 10. FIG. 2 is an atomic force microscope image of a portion of a sheet 26 used to produce a complementary set of flakes, such as a hollow flake 30a, and a solid flake 30b. As can be seen in FIG. 2, the first marking 12 depresses deeper down from the plane of the surface 28 of the substrate 38 as compared to the second marking 10. In this manner, the first marking 12 can define a boundary of a hollow flake 30a, which in this instance is a square shape. The second marking 10 is less deep, relative to the first marking 12, and can define a solid flake 30b, for example, a plurality of solid flakes, which in this instance is a plurality of letters, i.e., S, A, M, P, L, and E. A complementary set of flakes can include one hollow flake 30a and multiple solid flakes 30b.

The first marking 12 can be continuous along a dimension, such as the length 25 or a width, of the substrate 38. For example, the first marking 12 can have a same depression or a same protrusion along the dimension. In another aspect, the first marking 12 can be discontinuous along the dimension of the substrate 38. For example, the first marking 12 can have a varied depression or a varied protrusion to form perforations along the dimension.

The substrate 38 can be any material capable of receiving the first marking 12 and the second marking 10. The substrate can have a length 25 and a height/depth 24. The height/depth 24 should be a sufficient amount such that the first marking 12 and/or the second marking 10 do not depress down an entire height of the substrate 38, i.e. does not extend through from a top surface 28 to a bottom surface. The substrate 38 can have a length 25 to enable a plurality of complementary sets of flakes to be formed.

For economic reasons, to simultaneously mass produce a plurality of complementary set of flakes 30a, 30b, the substrate 38 can be a roll of foil, as shown in FIG. 1. The substrate 38 can be embossed with microstructures, such as a first marking 12 and/or a second marking 10, that can facilitate a breakage of an applied coating 36 into a plurality of complementary sets of flakes 30a, 30b having a specifically designed shape. The substrate 38 can be embossed with a microstructure, such as a third marking 14, that does not facilitate a breakage of an applied coating in a specifically designed shape, but instead defines a contour of an image. In this manner, the third marking 14 can provide an additional means for providing authentication of an article.

The sheet 26 can also include a coating 36 applied on the surface 28 of the substrate 38, wherein the coating 36 conforms to the surface 28 of the substrate 38 including the first marking 12 and the second marking 10, and optionally a third marking 14, if present. The coating 26 can interface with the surface 28 of the substrate 38. The coating 36 can be a single layer of a single material, multiple layers of a single material, or multiple layers of multiple materials.

In an aspect, the coating can include a material and/or a layer of material that responds to or is effected by an electric field or a magnetic field. In this manner, the complementary set of flakes 30a, 30b formed of the coating can be oriented when placed in an appropriate field.

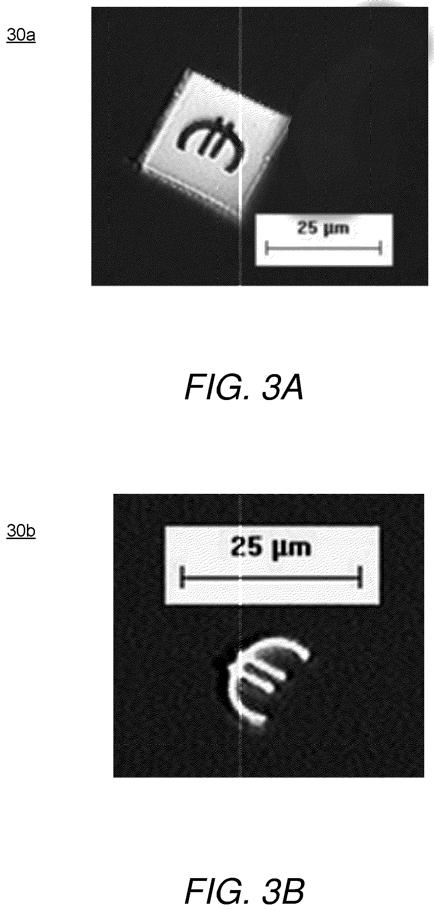

There is discloses a complementary set of flakes including a hollow flake 30a, and a solid flake 30b. FIGS. 3A and 3B, together, form a complementary set of flakes. FIG. 3A illustrates a hollow flake 30a of the complementary set of flakes. The hollow flake 30a can have a second configuration that can include the coating in a form of a frame around an absence of the coating. The absence of the coating can be in a same form as the solid flake 30b, as shown in FIG. 3B. In this aspect, the second configuration is a square shape with a void area (absence of coating) in a shape of a Euro symbol. As shown in FIG. 3B, the solid flake 30b can be formed of a coating and can have a first configuration. In this aspect, the first configuration is in a shape of a Euro symbol. The first configuration and the second configuration can be different, yet complementary. The first configuration and/or second configuration can be used to authenticate an article. The first configuration and/or the second configuration can be specifically designed and/or associated with a manufacturing facility, date of manufacture, or an aspect specifically related to the article, such as a Euro symbol on a banknote. At least one of the solid flake 30b, and the hollow flake 30a can include an indicium.

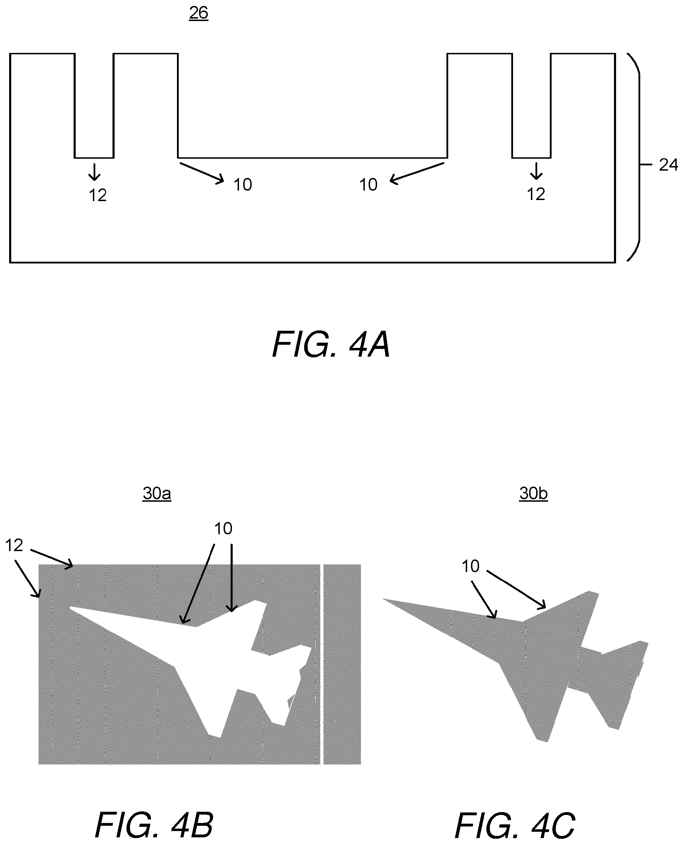

FIG. 4A illustrates a cross-section of a portion of a sheet 26 used to produce a complementary set of flakes, such as a hollow flake 30a as shown in FIG. 4B, and a solid flake 30b, as shown in FIG. 4C. The coating 26, which would be applied to the substrate 38, conformed, removed, and broken to form the complementary set of flakes 30a, 30b is not shown for clarity. The first marking 12 depresses down a same depth, from the plane of the surface 28 of the substrate 38, as the second marking 10. The first marking 12 can surround the second marking 10 thereby forming a frame. The second marking 10 can be walls delimiting the solid flake 30b. The first marking 12 can define a boundary (e.g., an outer boundary) of the hollow flake 30a, as shown in FIG. 4B. The second marking 10 can define a boundary (e.g., an outer boundary) of the solid flake 30b, as shown in FIG. 4C. The second marking 10 can also define a boundary around a void area (an area absent the coating) in the hollow flake 30a.

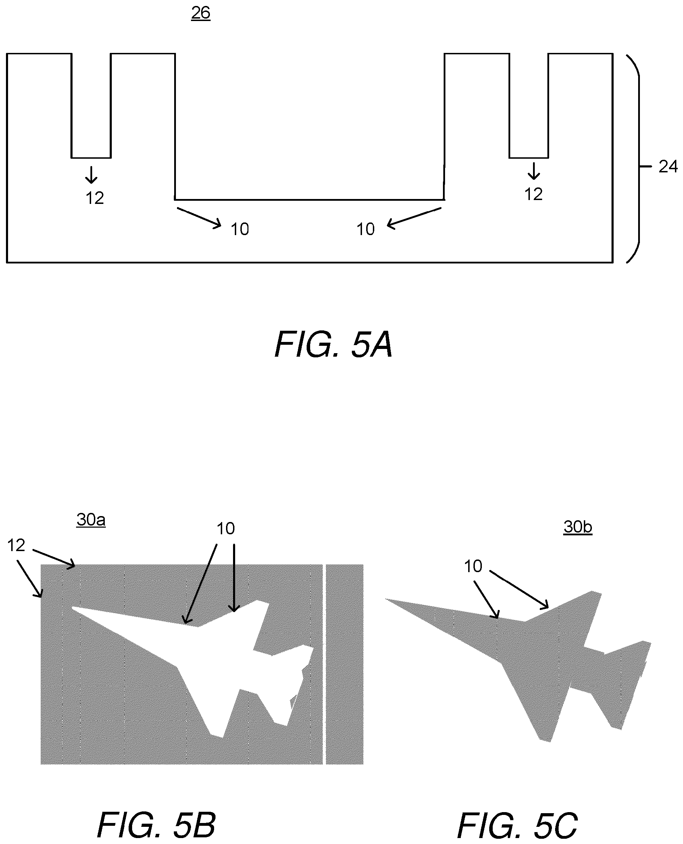

FIG. 5A illustrates a cross-section of a portion of a sheet 26 used to produce a complementary set of flakes, such as a hollow flake 30a as shown in FIG. 5B, and a solid flake 30b, as shown in FIG. 5C. The second marking 10 depresses deeper down, from the plane of the surface 28 of the substrate 38, as compared to the first marking 12. In an aspect, the second marking 10 can be walls delimiting the solid flake 30b. The delimiting walls can be deeper than the frames (second marking 12) of the hollow flake 30a. This can be useful in a case of smaller sized complementary sets of flakes because the smaller the size of the flakes, the more difficult it can become to break them into their respective shapes. As an example, the size of solid flake 30b of FIG. 5C can be half the size or smaller than the solid flake 30b of FIG. 4C. Therefore, having a deeper second marking 10 can facilitate a more precise separation of the solid flake 30b from the hollow flake 30a

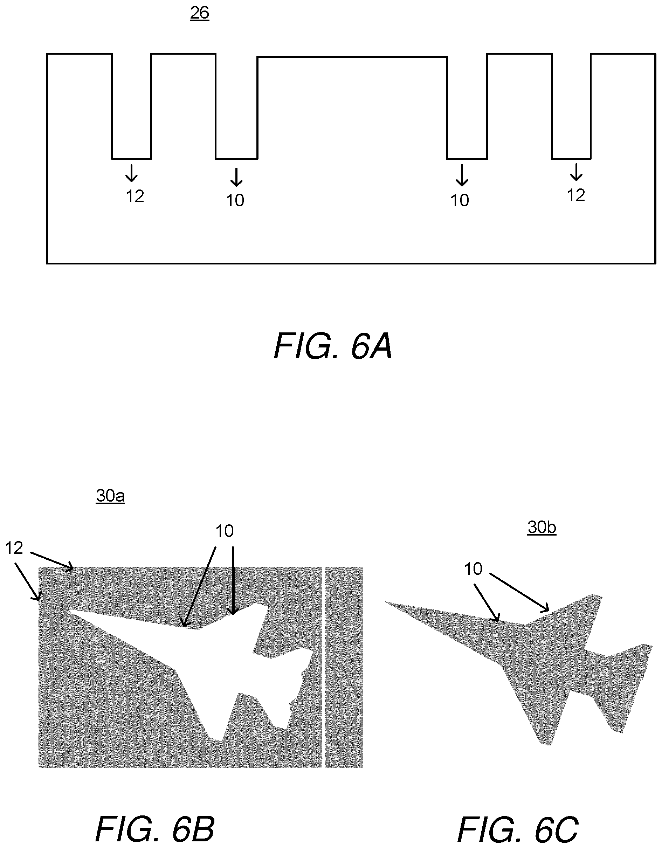

FIG. 6A illustrates a cross-section of a portion of a sheet 26 used to produce a complementary set of flakes, such as a hollow flake 30a as shown in FIG. 6B, and a solid flake 30b, as shown in FIG. 6C. As with FIGs. 4A-4C, the first marking 12 depresses down a same depth, from the plane of the surface 28 of the substrate 38, as the second marking 10. The first marking 12 can be a frame and the second marking 10 can be a frame.

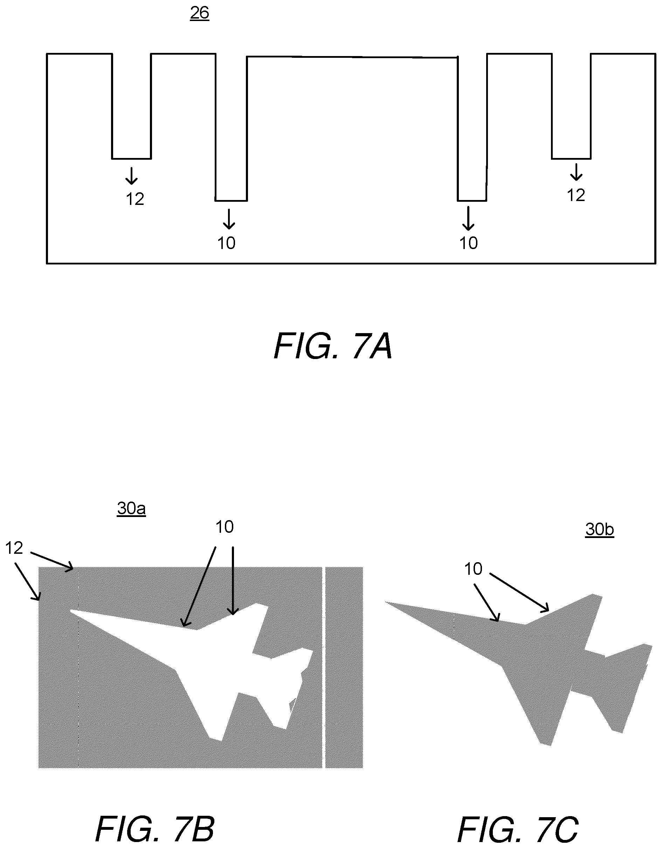

FIG. 7A illustrates a cross-section of a portion of a sheet 26 used to produce a complementary set of flakes, such as a hollow flake 30a as shown in FIG. 7B, and a solid flake 30b, as shown in FIG. 7C. The second marking 10 depresses deeper down, from the plane of the surface 28 of the substrate 38, as compared to the first marking 12. The first marking 12 can be a frame and the second marking 10 can be a frame.

The surface 28 of the substrate 38 can further include a third marking 14 that defines a boundary of an indicium. The indicium can be chosen from a symbol, a number, a word, a pattern, a logo, an image, a diffractive microstructure, and combinations thereof. The indicium can be seen with a microscope. The indicium can be used to personalize or provide another method for authentication of an article containing the complementary set of flakes.

The third marking 14 can be formed by a process chosen from stamping, embossing, etching by mechanical means, etching by chemical means, and lasers. The third marking 14 can be present on a surface of the hollow flake 30a, the solid flake 30b, or both. The third marking 14 can be chosen from a depression down from the plane of the substrate 38, a protrusion up from the plane of the substrate 38, and a combination thereof.

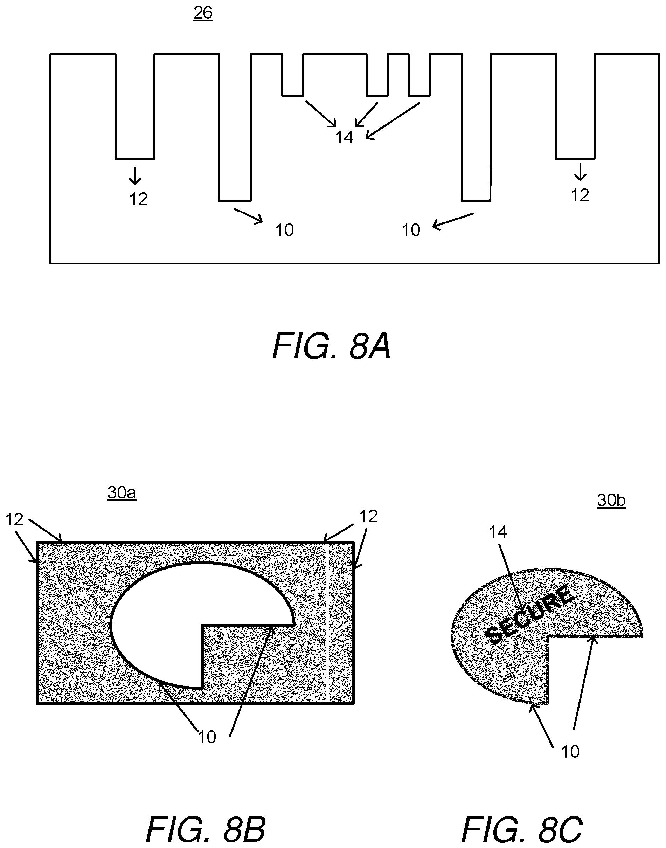

FIG. 8A illustrates a cross-section of a portion of a sheet 26 used to produce a complementary set of flakes, such as a hollow flake 30a as shown in FIG. 8B, and a solid flake 30b, as shown in FIG. 8C. The first marking 12 and the second marking 10 each depress deeper down from the plane of the surface 28 of the substrate 38 as compared to the third marking 14. The first marking 12 and the second marking 10 are each frames. The second marking 10 depresses deeper down, from the plane of the surface 28 of the substrate 38, as compared to the first marking 12, and as compared to the third marking 14. The third marking 14 can depress into the substrate 38 an insufficient depth so that the third marking 14 does not facilitate a breakage of an applied coating in a specifically designed shape, but instead defines a contour of an indicium. In an aspect, the third marking 14 can be surrounded by the second marking 10. The third marking 14 can form an indicium on a solid flake 30b. In this instance, a complementary set of flakes can include a hollow flake 30a without an indicium on its surface, and a solid flake 30b with an indicium on a surface of the solid flake 30b.

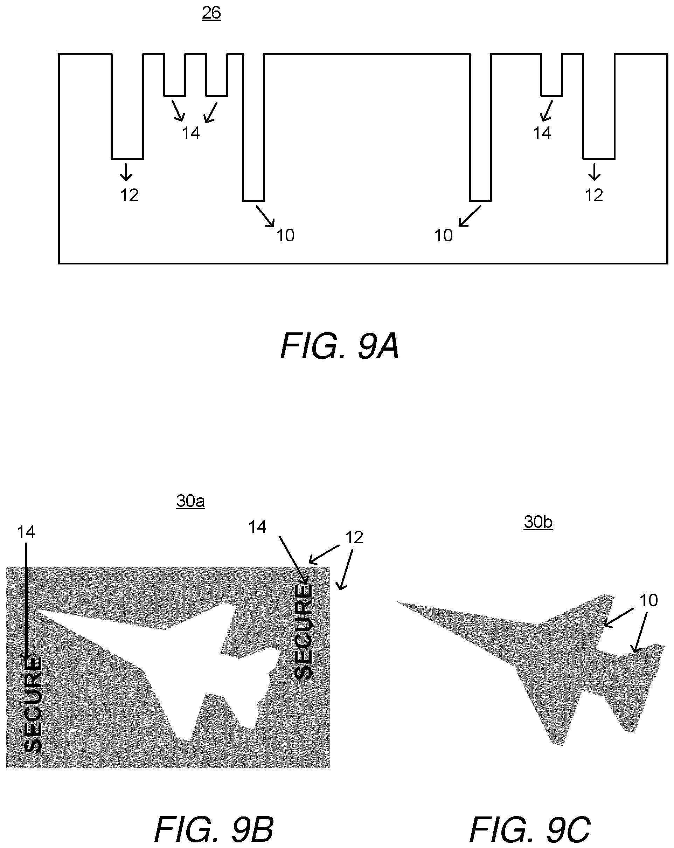

FIG. 9A illustrates a cross-section of a portion of a sheet 26 used to produce a complementary set of flakes, such as a hollow flake 30a as shown in FIG. 9B, and a solid flake 30b, as shown in FIG. 9C. FIG. 9A is similar to FIG. 8A, but the location of the third marking 14, relative to the first marking 12 and the second marking 10, has changed. In an aspect, the third marking 14 can be surrounded by the first marking 12. The third marking 14 can form an indicium on a hollow flake 30a. In this instance, a complementary set of flakes can include a solid flake 30b without an indicium on its surface, and a hollow flake 30a with an indicium on a surface of the hollow flake 30a.

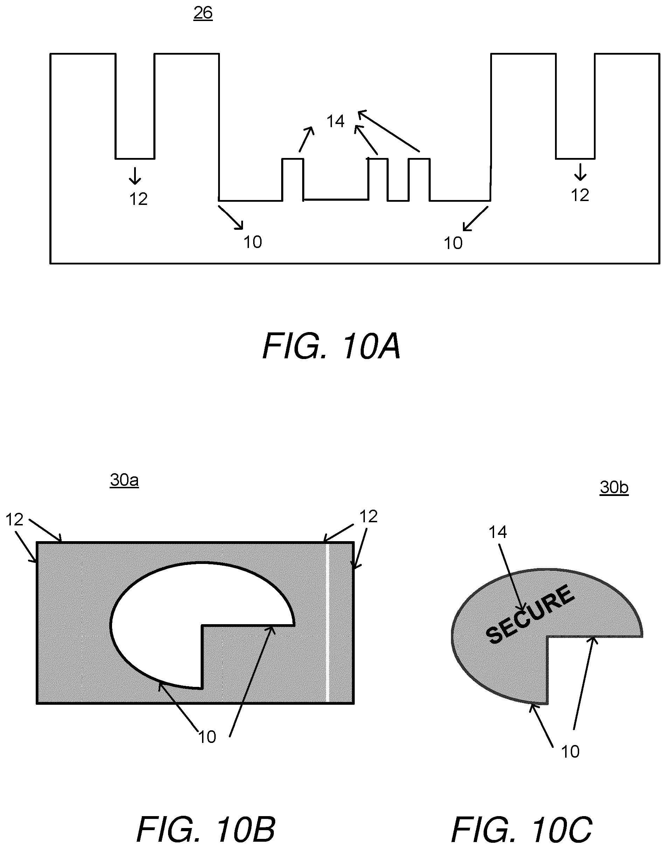

FIG. 10A illustrates a cross-section of a portion of a sheet 26 used to produce a complementary set of flakes, such as a hollow flake 30a as shown in FIG. 10B, and a solid flake 30b, as shown in FIG. 10C. The second marking 10 can be depressed deeper into the substrate 38 as compared to the first marking 12. In an aspect, the first marking 12 can be a frame, and the second marking 10 can be a wall delimiting the solid flake 30b. The third marking 14 can be surrounded by the second marking 10. The third marking 14 can be a protrusion up from the plane of the substrate 38. In an aspect, the third marking 14 can be present on a solid flake 30b.

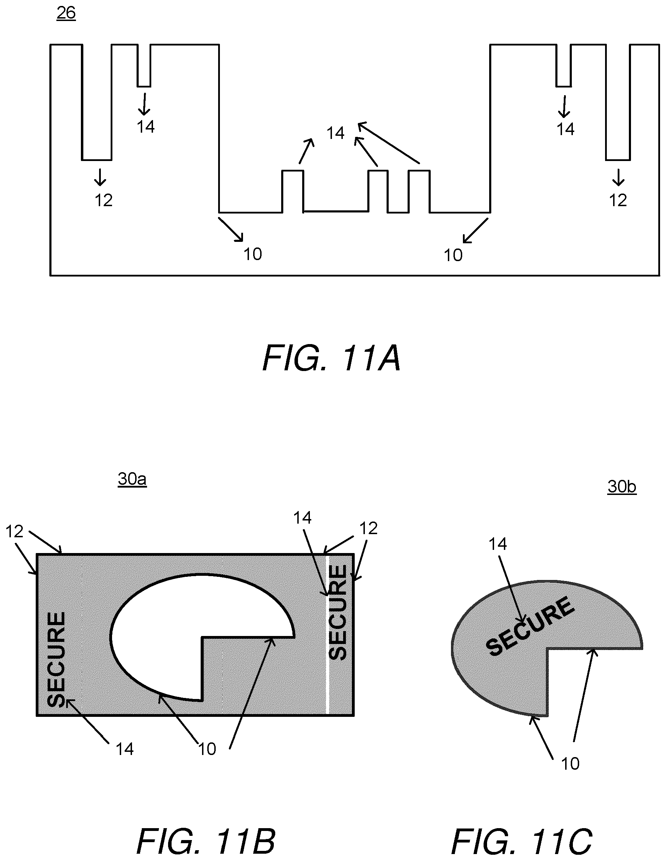

FIG. 11A illustrates a cross-section of a portion of a sheet 26 used to produce a complementary set of flakes, such as a hollow flake 30a as shown in FIG. 11B, and a solid flake 30b, as shown in FIG. 11C. FIG. 11a is similar to FIG. 10A except that there is a plurality of a third marking 14. Besides the presence of the third marking 14 on the solid flake 30b, the third marking 14 can also be present on the hollow flake 30a. The first marking 12 can surround a first instance of the third marking 14, and the second marking 10 can surround a second instance of the third marking 14. The first instance of the third marking 14 can be a depression down from the plane of the substrate 38. The second instance of the third marking 14 can be a protrusion up from the plane of the substrate 38.

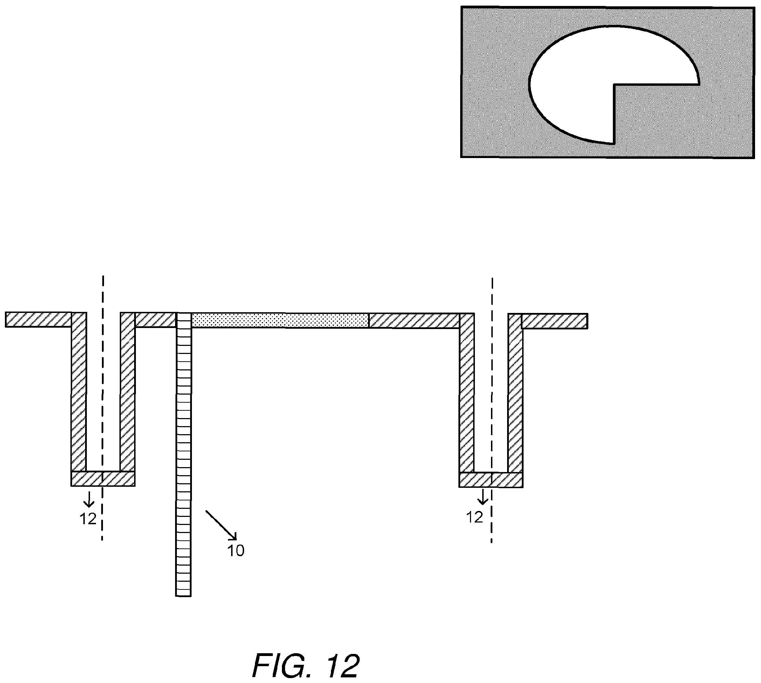

FIG. 12 illustrates a hollow flake 30a and its associated cross-section. The hollow flake 30a can be absent indicia. In an aspect, the hollow flake 30a can include a portion of the second marking 10 that did not completely break during formation of the hollow flake 30a and the solid flake 30b. In an aspect, the solid flake 30a does not include a portion of the second marking 10. The diagonal hash can be the first marking 12, the horizontal stripe can be the second marking 10, and the dotted section can be an absence of coating.

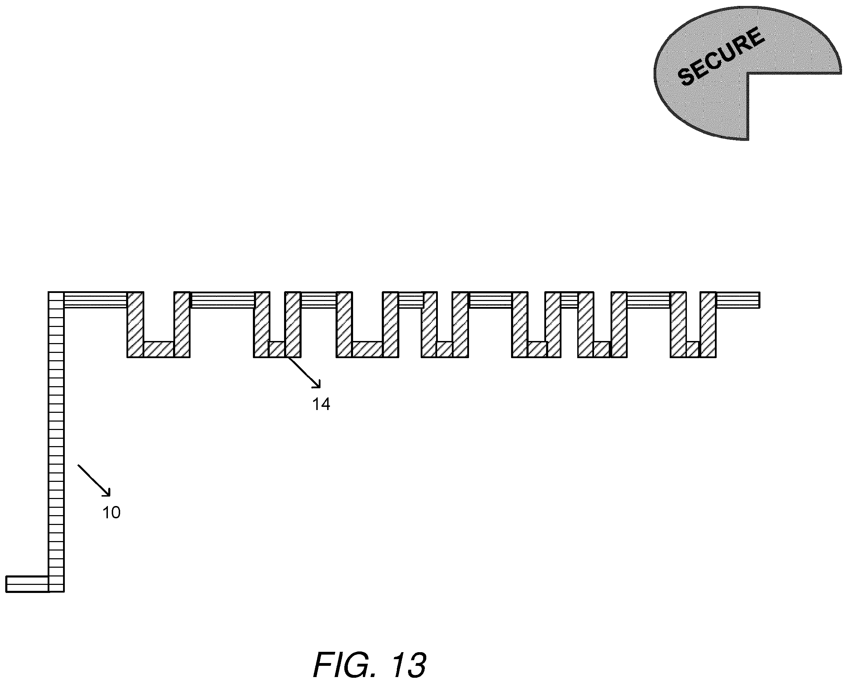

FIG. 13 illustrates a solid flake 30b and its associated cross-section. The solid flake 30b can include indicia. In an aspect, the solid flake 30b can include a portion of the second marking 10 that did not completely break during formation of the solid flake 30b. In an aspect, the solid flake 30b does not include a portion of the second marking 10. The diagonal hash can be the third marking 14, e.g., forming the letters "SECURE", and the horizontal stripe (on the left) can be the second marking 10 that is left over from the frame that makes a solid flake from a hollow flake. The horizontal stripe (between and/or among the third marking 14) can be the coating.

There is also disclosed a coating composition, including at least one flake from the complementary set of flakes 30a, 30b; a special effect pigment; and a liquid medium. The special effect pigment is a color shifting pigment that shifts from magenta to green upon a change in viewing angle.

The composition can include a liquid medium, such as varnish base, pain vehicle or ink vehicle. Non-limiting examples of a suitable liquid medium include polyvinyl alcohol; polyvinyl acetate polyvinylpyrrolidone; poly(ethoxyethylene); poly(methoxyethylene); poly(acrylic)acid; poly(acrylamide); poly(oxyethylene); poly(maleic anhydride); hydroxyethyl cellulose; cellulose acetate; poly(saccharides) such as gum arabic and pectin; poly(acetals) such as polyvinylbutyral; poly(vinyl halides) such as polyvinyl chloride and polyvinylene chloride; poly(dienes) such as polybutadiene; poly(alkenes) such as polyethylene; poly(acrylates) such as polymethyl acrylate; poly(methacrylates) such as poly methylmethacrylate; poly(carbonates) such as poly(oxycarbonyl oxyhexamethylene; poly(esters) such as polyethylene terephthalate; poly(urethanes); poly(siloxanes); poly(suphides); poly(sulphones); poly(vinylnitriles); poly(acrylonitriles); poly(styrene); poly(phenylenes) such as poly(2,5 dihydroxy-1,4-phenyleneethylene); poly(amides); natural rubbers; formaldahyde resins; other polymers and mixtures of polymers; solvents; and polymers with solvents.

At least one flake of the complementary set of flakes can be dispersed into the liquid medium in a dilute concentration so that the flakes would not be easily detectable by casual observation. In an aspect, the flakes can be present in the composition in an amount ranging from about 0.5 wt.% to about 30 wt. %, relative to the total weight of the composition; for example, from about 1 wt.% to about 20 wt.%; and as a further example, from about 5 wt.% to about 15 wt. %.

The composition can also include a special effect pigment. The special effect pigment can have a random shape, i.e., a shape that was not specifically designed as part of the manufacturing process for making the special effect pigment. Non-limiting examples of suitable special effect pigments include Optically Variable Pigments (OVP), Magnetic OVP, Pearlescent pigments, Thin Film Interference pigments, Diffractive pigments, and combinations.

The complementary set of flakes would not be discerned by unaided human vision, but can be seen under about 50x to 300x magnification.

The composition can be coated onto a substrate; such as paper or plastic to form an article. The article can be anything in which the authenticity of the article needs to be verified. Non-limiting examples of articles include stock certificates, passports, original product packaging, bank notes, and the like.

A method of making a complementary set of flakes can include providing a substrate 38 having a surface 28, wherein the surface 28 includes a first marking 12 that defines a boundary of a hollow flake 30a, and a second marking 10 that defines a boundary of a solid flake 30b, wherein the first marking 12 and the second marking 10 are each, independently, configured to protrude from a plane of the surface 28 or depress down from the plane of the surface 28, and wherein the first marking 12 surrounds the second marking 10.

The method can also include applying a coating onto the surface 28 of the substrate 38 so that the coating conforms to the first marking 12 and the second marking 10. The coating has been discussed above.

The method can include removing the conformed coating from the substrate 38; and breaking the conformed coating along the first marking 12 and the second marking 10 to form a hollow flake 30a and a solid flake 30b, respectively. In this manner, the step of breaking can be in a controlled or predictable manner to limit or reduce breaking the coating in a location intended for the hollow flake 30a and/or the solid flake 30b. The method can also include grinding the broken coating to the further define a shape of the flakes.

Although it may be possible to fabricate flakes in great quantities by cutting a substrate into flakes by use of mechanical cutters, it is less costly and labor intensive to break the coating along predetermined formed lines, such as the first and/or second marking, to form the flakes.

The substrate 38 can be embossed by a single technology or a combination of technologies. Non-limiting examples of embossing technology include laser writing, e-beam writing, diamond scribing, masking, and the like. A nickel shim can be electroformed from the originally embossed substrate, and the nickel shim can be recombined to a desired final size for production. The recombined nickel shim can be used in a variety of high resolution replication technologies, such as hot stamping-embossing, hot roller-embossing, injection-molding, UV casting-molding, and the like. In some replication technologies, a UV cured shim can be created and used instead of the nickel shim.

### EXAMPLE

The complementary set of flakes shown in FIGs. 3A-B were made. The hollow flake 30a of FIG. 3A is a 24 x 24 micron square with a void area in a shape of a Euro symbol. FIG. 3B is the Euro symbol. A sheet 26, similar to that shown in FIG. 6A was coated with a multiple layer coating. The multiple layer coating was made by vacuum deposition of three layers corresponding to: 400 nm MgF2 / 100 nm Al / 400 nm MgF2. The multiple layer coating conformed to the sheet so that the coating included the first marking 12 and the second marking 10. The conformed coating was broken along the first marking 12 to form the hollow flake 30a of FIG. 3A, and was broken along the second marking 10 to form the solid flake 30b of FIG. 3B.

From the foregoing description, those skilled in the art can appreciate that the present teachings can be implemented in a variety of forms. Therefore, while these teachings have been described in connection with particular embodiments and examples thereof, the true scope of the present teachings should not be so limited. Various changes and modifications can be made without departing from the scope of the teachings herein.

## Claims

1. A sheet (26) for making a complementary set of flakes, comprising:
a substrate (38) having a surface (28),
wherein the surface (28) includes a first marking (12) that defines a boundary of a hollow flake (30a) of the complementary set of flakes , and a second marking (10) that defines a boundary of a solid flake (30b) of the complementary set of flakes;
wherein the first marking (12) and the second marking (10) are each, independently, configured to protrude from a plane of the surface (28) or depress down from the plane of the surface (28); and
wherein the first marking (12) surrounds the second marking (10).

2. The sheet (26) of claim 1, further comprising a coating (36) on the surface (28) of the substrate (38), wherein the coating (36) conforms to the surface (28) of the substrate (38) including the first marking (12) and the second marking (10).

3. The sheet (26) of claim 1 or claim 2, wherein the substrate (38) is a roll of foil.

4. The sheet (26) of any of claims 1 to 3, wherein the second marking (10) is a wall delimiting the solid flake (30b).

5. The sheet (26) of any claims 1 to 4, wherein the second marking (10) depresses deeper down from the plane of the surface (28) of the substrate (38) as compared to the first marking (12).

6. The sheet (26) of any of claims 1 to 4, wherein the second marking (10) depresses down a same depth from the plane of the surface (28) of the substrate (38) as the first marking (12).

7. The sheet (26) of any of claims 1 to 6, wherein the first marking (12) does not depress down an entire height of the substrate (38).

8. The sheet (26) of any of claims 1 to 7, wherein the first marking (12) is continuous along a dimension of the substrate (38).

9. The sheet (26) of any of claims 1 to 7, wherein the first marking (12) is discontinuous along a dimension of the substrate (38).

10. The sheet (26) of any of claims 1 to 9, wherein the surface (28) of the substrate (38) further includes a third marking (14) that defines a boundary of an indicium.

11. The sheet (26) of claim 10, wherein the indicium is chosen from a symbol, a number, a word, a pattern, a logo, an indicium, a diffractive microstructure, and combinations thereof.

12. A complementary set of flakes, comprising:
a solid flake (30b) formed of a coating (36) and having a first configuration; and
a hollow flake (30a) having a second configuration, wherein the second configuration includes the coating (36) in a form of a frame around an absence of the coating (36), wherein the absence of the coating (36) is in the form of the first configuration.

13. The complementary set of flakes of claim 14, wherein at least one of the solid flake (30b) and the hollow flake (30a) includes an indicium.

14. A method of making a complementary set of flakes, comprising:
providing a substrate (38) having a surface (28),
wherein the surface (28) includes a first marking (12) that defines a boundary of a hollow flake (30a), and a second marking (10) that defines a boundary of a solid flake (30b),
wherein the first marking (12) and the second marking (10) are each, independently, configured to protrude from a plane of the surface (28) or depress down from the plane of the surface (28), and
wherein the first marking (12) surrounds the second marking (10);
applying a coating (36) onto the surface (28) of the substrate (38) so that the coating (36) conforms to the first marking (12) and the second marking (10);
removing the conformed coating from the substrate (38); and
breaking the conformed coating along the first marking (12) and the second marking (10) to form a hollow flake (30a) and a solid flake (30b).

15. A coating composition, comprising:
at least one flake (30a, 30b) from the complementary set of flakes of claim 12 or 13;
a special effect pigment; and
a liquid medium.

## Patentansprüche

1. Ein Blatt (26) zur Herstellung eines komplementären Satzes von Flocken, das Folgendes beinhaltet:
ein Substrat (38) mit einer Oberfläche (28),
wobei die Oberfläche (28) eine erste Markierung (12), die eine Grenze einer hohlen Flocke (30a) des komplementären Satzes von Flocken definiert, und eine zweite Markierung (10), die eine Grenze einer festen Flocke (30b) des komplementären Satzes von Flocken definiert, umfasst;
wobei die erste Markierung (12) und die zweite Markierung (10) jeweils unabhängig konfiguriert sind, um von einer Ebene der Oberfläche (28) vorzustehen oder von der Ebene der Oberfläche (28) nach unten zu drücken; und
wobei die erste Markierung (12) die zweite Markierung (10) umgibt.

2. Blatt (26) gemäß Anspruch 1, das ferner eine Beschichtung (36) auf der Oberfläche (28) des Substrats (38) beinhaltet, wobei sich die Beschichtung (36) an die Oberfläche (28) des Substrats (38) einschließlich der ersten Markierung (12) und der zweiten Markierung (10) anpasst.

3. Blatt (26) gemäß Anspruch 1 oder Anspruch 2, wobei das Substrat (38) eine Folienrolle ist.

4. Blatt (26) gemäß einem der Ansprüche 1 bis 3, wobei die zweite Markierung (10) eine Wand ist, die die feste Flocke (30b) begrenzt.

5. Blatt (26) gemäß einem der Ansprüche 1 bis 4, wobei die zweite Markierung (10) von der Ebene der Oberfläche (28) des Substrats (38) im Vergleich zu der ersten Markierung (12) tiefer nach unten drückt.

6. Blatt (26) gemäß einem der Ansprüche 1 bis 4, wobei die zweite Markierung (10) von der Ebene der Oberfläche (28) des Substrats (38) eine gleiche Tiefe nach unten drückt wie die erste Markierung (12).

7. Blatt (26) gemäß einem der Ansprüche 1 bis 6, wobei die erste Markierung (12) nicht eine gesamte Höhe des Substrats (38) nach unten drückt.

8. Blatt (26) gemäß einem der Ansprüche 1 bis 7, wobei die erste Markierung (12) entlang einer Abmessung des Substrats (38) kontinuierlich ist.

9. Blatt (26) gemäß einem der Ansprüche 1 bis 7, wobei die erste Markierung (12) entlang einer Abmessung des Substrats (38) diskontinuierlich ist.

10. Blatt (26) gemäß einem der Ansprüche 1 bis 9, wobei die Oberfläche (28) des Substrats (38) ferner eine dritte Markierung (14) umfasst, die eine Grenze eines Zeichens definiert.

11. Blatt (26) gemäß Anspruch 10, wobei das Zeichen aus einem Symbol, einer Zahl, einem Wort, einem Muster, einem Logo, einem Zeichen, einer diffraktiven Mikrostruktur und Kombinationen davon ausgewählt ist.

12. Ein komplementärer Satz von Flocken, der Folgendes beinhaltet:
eine feste Flocke (30b), die aus einer Beschichtung (36) gebildet ist und eine erste Konfiguration aufweist; und
eine hohle Flocke (30a), die eine zweite Konfiguration aufweist, wobei die zweite Konfiguration die Beschichtung (36) in einer Form eines Rahmens um eine Abwesenheit der Beschichtung (36) herum umfasst, wobei die Abwesenheit der Beschichtung (36) in der Form der ersten Konfiguration vorliegt.

13. Komplementärer Satz von Flocken gemäß Anspruch 14, wobei mindestens eine von der festen Flocke (30b) und der hohlen Flocke (30a) ein Zeichen umfasst.

14. Ein Verfahren zur Herstellung eines komplementären Satzes von Flocken, das Folgendes beinhaltet:
Bereitstellen eines Substrats (38) mit einer Oberfläche (28),
wobei die Oberfläche (28) eine erste Markierung (12), die eine Grenze einer hohlen Flocke (30a) definiert, und eine zweite Markierung (10), die eine Grenze einer festen Flocke (30b) definiert, umfasst,
wobei die erste Markierung (12) und die zweite Markierung (10) jeweils unabhängig konfiguriert sind, um von einer Ebene der Oberfläche (28) vorzustehen oder von der Ebene der Oberfläche (28) nach unten zu drücken, und wobei die erste Markierung (12) die zweite Markierung (10) umgibt;
Aufbringen einer Beschichtung (36) auf die Oberfläche (28) des Substrats (38), sodass sich die Beschichtung (36) an die erste Markierung (12) und die zweite Markierung (10) anpasst;
Entfernen der angepassten Beschichtung von dem Substrat (38); und
Brechen der angepassten Beschichtung entlang der ersten Markierung (12) und der zweiten Markierung (10), um eine hohle Flocke (30a) und eine feste Flocke (30b) zu bilden.

15. Eine Beschichtungszusammensetzung, die Folgendes beinhaltet:
mindestens eine Flocke (30a, 30b) aus dem komplementären Satz von Flocken gemäß Anspruch 12 oder 13;
ein Spezialeffektpigment; und
ein flüssiges Medium.

## Revendications

1. Une feuille (26) destinée à la fabrication d'un ensemble complémentaire de paillettes, comprenant :
un substrat (38) présentant une surface (28),
où la surface (28) inclut un premier marquage (12) qui définit une limite d'une paillette creuse (30a) de l'ensemble complémentaire de paillettes, et un deuxième marquage (10) qui définit une limite d'une paillette pleine (30b) de l'ensemble complémentaire de paillettes ;
où le premier marquage (12) et le deuxième marquage (10) sont chacun, indépendamment, configurés pour faire saillie à partir d'un plan de la surface (28) ou s'enfoncer vers le bas à partir du plan de la surface (28) ; et
où le premier marquage (12) entoure le deuxième marquage (10).

2. La feuille (26) de la revendication 1, comprenant en outre un revêtement (36) sur la surface (28) du substrat (38), où le revêtement (36) se conforme à la surface (28) du substrat (38) incluant le premier marquage (12) et le deuxième marquage (10).

3. La feuille (26) de la revendication 1 ou de la revendication 2, où le substrat (38) est un rouleau de clinquant.

4. La feuille (26) de n'importe lesquelles des revendications 1 à 3, où le deuxième marquage (10) est une paroi délimitant la paillette pleine (30b).

5. La feuille (26) de n'importe lesquelles des revendications 1 à 4, où le deuxième marquage (10) s'enfonce plus profondément vers le bas à partir du plan de la surface (28) du substrat (38) par comparaison au premier marquage (12).

6. La feuille (26) de n'importe lesquelles des revendications 1 à 4, où le deuxième marquage (10) s'enfonce vers le bas à une même profondeur à partir du plan de la surface (28) du substrat (38) que le premier marquage (12).

7. La feuille (26) de n'importe lesquelles des revendications 1 à 6, où le premier marquage (12) ne s'enfonce pas vers le bas sur une hauteur entière du substrat (38).

8. La feuille (26) de n'importe lesquelles des revendications 1 à 7, où le premier marquage (12) est continu le long d'une dimension du substrat (38).

9. La feuille (26) de n'importe lesquelles des revendications 1 à 7, où le premier marquage (12) est discontinu le long d'une dimension du substrat (38).

10. La feuille (26) de n'importe lesquelles des revendications 1 à 9, où la surface (28) du substrat (38) inclut en outre un troisième marquage (14) qui définit une limite d'un indice.

11. La feuille (26) de la revendication 10, où l'indice est choisi parmi un symbole, un numéro, un mot, un motif, un logo, un indice, une microstructure diffractive, et des combinaisons de ceux-ci.

12. Un ensemble complémentaire de paillettes, comprenant :
une paillette pleine (30b) formée d'un revêtement (36) et présentant une première configuration ; et
une paillette creuse (30a) présentant une deuxième configuration, où la deuxième configuration inclut le revêtement (36) sous la forme d'un cadre autour d'une absence du revêtement (36), où l'absence du revêtement (36) est sous la forme de la première configuration.

13. L'ensemble complémentaire de paillettes de la revendication 14, où au moins une paillette parmi la paillette pleine (30b) et la paillette creuse (30a) inclut un indice.

14. Un procédé de fabrication d'un ensemble complémentaire de paillettes, comprenant :
la fourniture d'un substrat (38) présentant une surface (28),
où la surface (28) inclut un premier marquage (12) qui définit une limite d'une paillette creuse (30a), et un deuxième marquage (10) qui définit une limite d'une paillette pleine (30b),
où le premier marquage (12) et le deuxième marquage (10) sont chacun, indépendamment, configurés pour faire saillie à partir d'un plan de la surface (28) ou s'enfoncer vers le bas à partir du plan de la surface (28), et
où le premier marquage (12) entoure le deuxième marquage (10) ;
l'application d'un revêtement (36) sur la surface (28) du substrat (38) de sorte que le revêtement (36) se conforme au premier marquage (12) et au deuxième marquage (10) ;
le retrait du revêtement conformé du substrat (38) ; et
la rupture du revêtement conformé le long du premier marquage (12) et du deuxième marquage (10) afin de former une paillette creuse (30a) et une paillette pleine (30b).

15. Une composition de revêtement, comprenant :
au moins une paillette (30a, 30b) de l'ensemble complémentaire de paillettes de la revendication 12 ou de la revendication 13 ;
un pigment à effet spécial ; et
un milieu liquide.
